# EUROPEAN PATENT APPLICATION

(11) **EP 3 203 452 A1**
(43) Date of publication of application: **09.08.2017**
(21) Application number: 17154511.4
(22) Date of filing: 03.02.2017
(51) Int. Cl.: G07G 1/00, G07G 1/14, G06Q 20/20

(54) **NETWORKED COMPUTER SYSTEM INCLUDING REGISTER, PAYMENT MACHINE, AND CENTRAL COMPUTER**

(30) Priority: 05.02.2016 JP 2016021130
(71) Applicant: Toshiba TEC Kabushiki Kaisha, Tokyo 141-0032 (JP)
(72) Inventor: KAKINO, Tomonari, Shinagawa-ku, Tokyo 141-8562 (JP)
(74) Representative: Takeuchi, Maya

(57) **Abstract**

A networked computer system includes a register configured to generate registration information based on merchandise information, for each of a plurality of transactions, each of which is associated with a transaction ID, a payment machine configured to perform payment processing separately for each group of registration information associated with one of the transaction IDs, and a central computer storing the registration information transmitted from the register in association with the transaction ID for which the registration information was generated, and configured to transmit the registration information associated with a transaction ID to the payment machine when the payment machine confirms the transaction ID. The register is configured to issue a transaction ID for each separate transaction. The payment machine is configured to perform switching from a standby state to a payment processing state, upon confirming that the transaction ID corresponding to a current transaction, has been properly input therein.

## Description

### FIELD

The present invention relates to checkout technologies in general, used e.g. in a supermarket, and, in particular, embodiments described herein relate to a networked computer system including registers, payment machines, and a central computer.

### BACKGROUND

Generally, as a checkout system used in a supermarket and the like, a system in which a register and a payment machine are provided is known. The register generates registration information based on merchandise information which is input in accordance with a registration operation. The payment machine performs payment processing for collecting payment for merchandise, based on the registration information. In this system, generation of pieces of registration information regarding all items of merchandise as a sales target is ended in the register, and then the generated registration information is transferred to the payment machine. If the payment machine receives the registration information, the payment machine goes into a standby state where an input operation by an operator is allowed. The payment machine performs payment preparation processing required for the payment processing in accordance with an input operation, and then performs the payment processing based on the registration information. In the payment preparation processing, for example, selection of a payment method (for example, selection of cash, a credit card, an electronic money, and the like, selection of the type of the credit card or the electronic money), an input of coupon information, and the like are performed.

To improve the above technologies, there is provided a networked computer system comprising:
a register configured to generate registration information based on merchandise information, for each of a plurality of transactions, each of which is associated with a transaction ID;
a payment machine configured to perform payment processing separately for each group of registration information associated with one of the transaction IDs; and
a central computer networked with the register and the payment machine for communication therewith, the central computer storing the registration information transmitted from the register in association with the transaction ID for which the registration information was generated, and configured to transmit the registration information associated with a transaction ID to the payment machine when the payment machine confirms the transaction ID, wherein
the register is configured to issue a transaction ID for each separate transaction, and
the payment machine is configured to perform switching from a standby state to a payment processing state, upon confirming that the transaction ID corresponding to a particular transaction for which the register is currently generating registration information, has been properly input into the payment machine, so that payment processing for the registration information being generated by the register for the particular transaction is allowed to begin and a throughput of the networked computer system is increased.

Preferably, the register and the payment machine are physically separate.

Preferably still, the payment machine is one of at least two payment machines, each of which is networked with the central computer and at any of which payment processing for a particular transaction can be started, upon confirming that the transaction ID corresponding to the particular transaction for which the register is currently generating registration information, has been properly input.

Preferably yet, another one of the payment machines is carrying out payment processing for another transaction for which the register previously generated registration information.

Suitably, the register is configured to issue the transaction ID for a transaction prior to receiving an input through the register that the transaction has completed.

Suitably still, the register incudes a touch screen that displays a button for receiving an instruction to start the payment processing for the transaction for which the register is currently generating registration information, and detects the instruction indicating the start of the payment processing in accordance with an operation on the button.

Suitably yet, the register is configured to issue the transaction ID for a transaction prior to generating registration information based on the merchandise information.

Suitably further, the register issues the transaction ID based on data read from a recording medium, and
the payment machine is configured to read data from recording medium when confirming that the transaction ID has been properly input into the payment machine.

The invention further relates to a networked computer system, comprising:
a register configured to generate registration information based on merchandise information, for each of a plurality of transactions, each of which is associated with a transaction ID;
a payment machine configured to perform payment processing separately for each group of registration information associated with one of the transaction IDs; and
a central computer networked with the register and the payment machine for communication therewith, the central computer storing the registration information transmitted from the register in association with the transaction ID for which the registration information was generated, and configured to transmit the registration information associated with a transaction ID to the payment machine when the payment machine confirms the transaction ID, wherein
the register is configured to transmit a start instruction of the payment processing for a particular transaction for which the register is currently generating registration information, in accordance with detection of an instruction indicating that the payment processing is to be started, and
the payment machine is configured to perform switching from a standby state to a payment processing state upon confirming that the transaction ID corresponding to a particular transaction for which the register is currently generating registration information, has been properly input into the payment machine, so that payment processing for the registration information being generated by the register for the particular transaction is allowed to begin and a throughput of the networked computer system is increased.

Preferably, the register and the payment machine are physically separate.

Preferably still, the payment machine is one of at least two payment machines, each of which is networked with the central computer and at any of which payment processing for a particular transaction can be started, upon confirming that the transaction ID corresponding to the particular transaction for which the register is currently generating registration information, has been properly input.

Preferably yet, another one of the payment machines is carrying out payment processing for another transaction for which the register previously generated registration information.

Suitably, the register incudes a touch screen that displays a button for receiving the start instruction, and detects the instruction indicating the start of the payment processing in accordance with an operation on the button.

Suitably still, the button is displayed on the touch screen prior to displaying a key for indicating completion of the transaction.

The invention also relates to a method of enhancing processing throughput of a networked computer system having a register configured to generate registration information based on merchandise information, for each of a plurality of transactions, each of which is associated with a transaction ID, a payment machine configured to perform payment processing separately for each group of registration information associated with one of the transaction IDs, and a central computer networked with the register and the payment machine for communication therewith, said method comprising:
at the register, issuing a transaction ID for a transaction for which the register is currently generating registration information, and transmitting the registration information to the central computer;
at the central computer, storing the registration information transmitted from the register in association with the transaction ID for which the registration information was generated;
at the payment machine, switching from a standby state to a payment processing state, upon confirming that the transaction ID corresponding to a particular transaction for which the register is currently generating registration information, has been properly input into the payment machine; and
at the central computer, transmitting the registration information associated with the confirmed transaction ID to the payment machine.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a plan view illustrating an arrangement example of a checkout system according to an embodiment.
FIG. 2 is a block diagram illustrating a configuration of the checkout system according to the embodiment.
FIG. 3 is a block diagram illustrating a configuration of a register according to the embodiment.
FIG. 4 is a block diagram illustrating a configuration of a payment machine according to the embodiment.
FIG. 5 is a block diagram illustrating a configuration of a store computer according to the embodiment.
FIG. 6 is a flowchart illustrating an operation of the register according to the embodiment.
FIG. 7 is a flowchart illustrating an operation of the store computer according to the embodiment.
FIG. 8 is a flowchart illustrating an operation of the payment machine according to the embodiment.
FIG. 9 is a diagram illustrating an example of a registration screen displayed on a touch panel of the register in the embodiment.
FIG. 10 is a diagram illustrating an example of an operation screen displayed on a touch panel of the payment machine in the embodiment.
FIG. 11 is a diagram illustrating an example of the operation screen displayed on the touch panel of the payment machine in the embodiment.
FIG. 12 is a diagram illustrating an example of a detail screen of registration information displayed on the touch panel of the payment machine in the embodiment.
FIG. 13 is a diagram illustrating an example of the detail screen which has added registration information, and displayed on the touch panel of the payment machine in the embodiment.
FIGS. 14A to 14D are diagrams illustrating a time required for performing registration processing and payment processing in the checkout system according to the embodiment.
FIG. 15 is a diagram illustrating an example of a registration screen on which the number of a payment machine which performs the payment processing is displayed on the touch panel of the register in the embodiment.

### DETAILED DESCRIPTION

Embodiments provide a networked computer system for merchandise sales data processing, which can start processing required for payment processing before a registration operation is ended.

In general, according to one embodiment, a networked computer system includes a register configured to generate registration information based on merchandise information, for each of a plurality of transactions, each of which is associated with a transaction ID, a payment machine configured to perform payment processing separately for each group of registration information associated with one of the transaction IDs, and a central computer networked with the register and the payment machine for communication therewith, the central computer storing the registration information transmitted from the register in association with the transaction ID for which the registration information was generated, and configured to transmit the registration information associated with a transaction ID to the payment machine when the payment machine confirms the transaction ID. The register is configured to issue a transaction ID for each separate transaction. The payment machine is configured to perform switching from a standby state to a payment processing state, upon confirming that the transaction ID corresponding to a particular transaction for which the register is currently generating registration information, has been properly input into the payment machine, so that payment processing for the registration information being generated by the register for the particular transaction is allowed to begin and a throughput of the networked computer system is increased.

Therefore, in situations where the register is sequentially carrying out a series of transactions, and at least two payment machines are available, payment processing carried out by the payment machines can be performed in parallel, such that one payment machine is carrying out payment processing for an already completed transaction, while another payment machine is carrying out payment processing for a transaction currently being carried out by the register, to increase the throughput of the networked computer system.

Hereinafter, an embodiment will be described with reference to the drawings. A merchandise sales data processing system according to embodiments is realized, for example, as a checkout system installed in a store such as a supermarket. The checkout system includes a networked computer system including at least one merchandise register, at least one payment machine, and a central computer (e.g., store computer or store server). The store computer is connected to the merchandise register and the payment machines through a network.

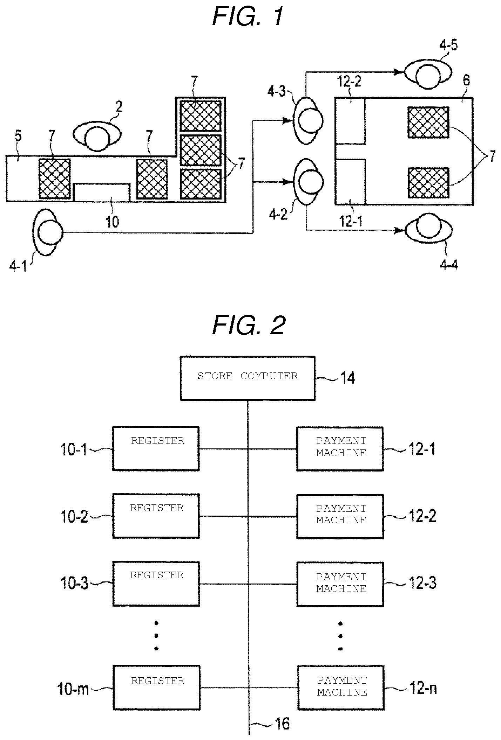

FIG. 1 is a plan view illustrating an arrangement example of the checkout system in the checkout system according to the embodiment. FIG. 1 illustrates an example in which one register 10 and two payment machines 12 (12-1 and 12-2) are provided.

The register 10 is a device for registering information of merchandise desired to be purchased by a shopper 4 (4-1) and for generating registration information used in payment processing (e.g., payment processing) in the payment machine 12. In the register 10, a registration operation of merchandise is performed by an employee referred to as a checker 2. The register 10 may include a function of performing payment processing based on the registration information, by an operation of the checker 2, similarly to the payment machine 12.

The payment machine 12 is a device for receiving the registration information which is generated by the register 10, and for performing the payment processing based on the received registration information. The payment machine 12 is operated by a shopper 4 (4-2, 4-3). The payment machine 12 may be also operated by the checker 2 or a salesperson which is different from the checker 2.

The register 10 is attached to a counter table 5. The counter table 5 includes an L-shaped top board, for example. If a shopping basket 7 of merchandise is placed on the counter table 5 by the shopper 4-1, the checker 2 performs a registration operation on the merchandise in the shopping basket 7. For example, the checker 2 performs a scan operation (reading operation of merchandise information) for causing a scanner to read merchandise information (merchandise code) on the merchandise.

In the checkout system according to the embodiment, the register 10 generates pieces of registration information for all items of merchandise which are set as a target of sales in one transaction, that is for all items of merchandise desired to be purchased by the shopper 4-1. Thus, the shopper 4-1 may move to the payment machine 12 and start payment processing, before the checker 2 performs an instruction to end the registration processing (before a settlement operation is performed). Thus, the checker 2 places the shopping basket 7 on which the registration processing is completed, so as to be near the payment machine 12 of the counter table 5. Thus, the shoppers 4-2 and 4-3 move so as to be near the payment machine 12 and easily take the shopping basket 7.

The payment machine 12 is attached to a bagging table 6, for example. The bagging table 6 is disposed so as to be near the counter table 5 to which the register 10 is attached. FIG. 1 illustrates an example in which two payment machines 12-1 and 12-2 are provided.

As illustrated in FIG. 1, since the payment machines 12-1 and 12-2 are disposed near the register 10, if the checker 2 has time to spare while working, the checker 2 may confirm the look of the shoppers 4-2 and 4-3 who respectively operate the payment machines 12-1 and 12-2.

FIG. 1 illustrates an example in which the two payment machines 12-1 and 12-2 are provided for one register 10. However, three payment machines 12 or more may be provided for the one register 10. A combination of the register 10 and the payment machine 12 is not limited to this. That is, any of a plurality of payment machines 12 may perform the payment processing on registration information generated by each of a plurality of registers 10. One or a plurality of payment machines 12 may be provided on the counter table 5 on which the register 10 is installed.

FIG. 2 is a block diagram illustrating a configuration of the checkout system according to the embodiment.

FIG. 2 illustrates an example in which a plurality (m) of registers 10-1, ..., and 10-m, and a plurality (n) of payment machines 12-1, ..., and 12-n are provided. The registers 10-1, ..., and 10-m, the payment machines 12-1, ..., and 12-n, and a store computer (server) 14 may be connected to each other through a network 16 such as a local area network (LAN), and may transmit and receive data to and from each other.

The store computer 14 manages all of registers 10 and payment machines 1 which are included in the checkout system. The store computer 14 receives registration information generated by the register 10(10-1, ..., and 10-m), and transmits the received registration information to any of the payment machines 12 (12-1, ..., and 12-n) in which the payment processing is performed.

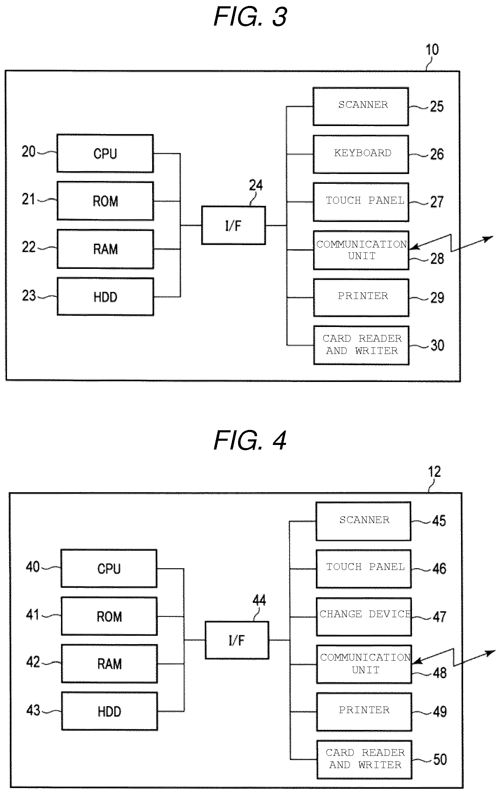

FIG. 3 is a block diagram illustrating a configuration of the register 10 (10-1, ..., and 10-m) according to the embodiment.

The register 10 includes a central processing unit (CPU) 20, a read-only memory (ROM) 21, a random-access memory (RAM) 22, a hard disk drive (HDD) 23, an interface (I/F) unit 24, a scanner 25, a keyboard 26, a touch panel 27, a communication unit 28, a printer 29, and a card reader and writer 30.

The CPU 20 controls the units to conduct various operations of the register 10, based on an operating system, middleware, and an application program which are recorded in the ROM 21 and the RAM 22.

Data referred when the CPU 20 performs various types of processing is recorded in the ROM 21 and the RAM 22, in addition to various programs executed by the CPU 20. When processing of generating registration information based on information of merchandise is performed, a registration information list is recorded in the RAM 22. In the registration information list, a transaction ID (details thereof will be described later) issued for purchase (transaction) of merchandise by the shopper 4, and registration information which is generated based on information read by a scan operation for each item of merchandise are correlated with each other.

A control program is included in a program executed by the CPU 20. The control program is used for performing, for example, the following processing: processing of inputting information (merchandise code and the like) of merchandise; processing of generating registration information used in the payment processing, in accordance with the information of merchandise; processing of issuing identification information (transaction ID) for identifying one transaction (generally, purchase of merchandise by one shopper 4); payment processing performed based on the registration information; and processing of transmitting the registration information to the store computer 14, and causing the transmitted registration information to be recorded in the store computer 14.

The HDD 23 corresponds to an auxiliary storage part of a computer. The HDD 23 stores data used when the CPU 20 performs various types of processing, or data generated by processing of the CPU 20. Instead of the HDD 23, for example, a solid state drive (SSD) and the like may be used.

The interface (I/F) unit 24 transfers data so as to be received and transmitted between the CPU 20, the ROM 21, the RAM 22, and the HDD 23, and the scanner 25, the communication unit 28, the touch panel 27, the printer 29, and the card reader and writer 30. As the I/F unit 24, for example, a well-known I/F unit which includes various buses such as a system bus, and various interface circuits for connecting the buses and the above units may be used.

The scanner 25 reads information of merchandise by optical scanning, and inputs a merchandise code specific to the merchandise. As the scanner 25, a fixed or a hand-held two-dimensional code scanner may be used, and a scanner having a type of identifying merchandise based on an image of the merchandise using an image recognition technology may be used. As the scanner 25, only one type may be provided or plural types may be provided.

Numeric keys for inputting an amount of money, a calculation key for performing calculation such as the subtotal and the grand total, keys for inputting various commands, merchandise keys to which plural items of merchandise may be assigned, and the like are provided in the keyboard 26. A command in accordance with an operation corresponding to each of the above-described keys is output.

The touch panel 27 includes a display device and a touch sensor. The display device displays a screen such as a graphical user interface (GUI) screen. For example, the display device displays a list of registration information (merchandise name, an amount of money, and the like) relating to merchandise which is registered as a purchase target, the subtotal amount of money, various types of menus, a button for inputting a command, and the like. As the display device, for example, a well-known device such as a color liquid crystal display (LCD) may be used. The touch sensor is disposed so as to overlap with a display surface of the display device. The touch sensor detects a touched position on the display surface of the display device by an operator, and transmits the detected position information to the CPU 20. As the touch sensor, a well-known device may be used.

The communication unit 28 performs communication between the store computer 14 and the payment machine 12 through a LAN 13.

As the printer 29, for example, a thermal printer, a dot impact printer, or the like is used. The printer 29 prints various character strings, an image, a code pattern (two-dimensional code and the like), and the like on a sheet for a receipt, so as to issue a receipt and the like.

The card reader and writer 30 reads data recorded in a card and writes data in the card. As the card, various cards in which information regarding payment processing is recorded, such as a membership card and a point card may be included in addition to a payment card, such as a credit card, a debit card, an electronic money card, and a prepaid card. The card reader and writer 30 may be a device of a magnetic type, a contact type, or a non-contact type. The card reader and writer 30 may include plural types of devices. The card reader and writer 30 may be operated by the shopper 4, in addition to the checker 2.

A display (for example, LCD) for providing various types of information for the shopper 4, or a touch panel which enables reception of an input operation by the shopper 4 may be also provided in the register 10. Further, a change device that receives coins and bills may be also provided in the register 10.

FIG. 4 is a block diagram illustrating a configuration of the payment machine 12 (12-1, ..., and 12-n) according to the embodiment.

The payment machine 12 includes a CPU 40, a ROM 41, a RAM 42, a HDD 43, an interface (I/F) unit 44, a scanner 45, a touch panel 46, a change device 47, a communication unit 48, a printer 49, and a card reader and writer 50.

The CPU 40 controls the units to conduct various operations of the payment machine 12, based on an operating system, middleware, and an application program which are recorded in the ROM 41 and the RAM 42.

Data referred when the CPU 40 performs various types of processing is recorded in the ROM 41 and the RAM 42, in addition to various programs executed by the CPU 40.

A control program for performing various types of processing is included in a program executed by the CPU 40. The various types of processing include, for example, payment processing performed by an operation of the shopper 4 based on registration information. The registration information is generated by the registration processing in the register 10 and is received in the payment machine 12. In the embodiment, payment preparation processing included in the payment processing may be started before the registration processing for one transaction in the register 10 is completed. For example, in the payment preparation processing, for example, selection of a payment method (for example, selection of cash, a credit card, an electronic money, and the like, selection of the type of the credit card or the electronic money), an input of coupon information, and the like are performed. Other processing performed before the payment processing may be included in the payment preparation processing.

The HDD 43 corresponds to an auxiliary storage part of a computer. The HDD 43 stores data used when the CPU 40 performs various types of processing, or data generated by processing of the CPU 40. Instead of the HDD 43, for example, a SSD and the like may be used.

The interface (I/F) unit 44 transfers data so as to be received and transmitted between the CPU 40, the ROM 41, the RAM 42, and the HDD 43, and the scanner 45, the touch panel 46, the change device 47, the communication unit 48, the printer 49, and the card reader and writer 50. As the I/F unit 44, for example, a well-known I/F unit which includes various buses such as a system bus, and various interface circuits for connecting the buses and the above units may be used.

The scanner 45 reads information by optical scanning, and inputs a code. For example, the scanner 45 is used for reading a code (for example, two-dimensional code) of a receipt printed by the printer 29 of the register 10. A code which is issued by the register 10, and indicates identification information (transaction ID) for identifying one transaction (generally, purchase of merchandise by one shopper) is printed on the receipt. As the scanner 25, a fixed or a hand-held two-dimensional code scanner may be used, and a scanner having a type of identifying merchandise based on an image of the merchandise, by using an image recognition technology may be used. As the scanner 25, only one type may be provided or plural types may be provided.

The touch panel 46 includes a display device and a touch sensor. The display device displays a certain screen such as a GUI screen. For example, the display device displays a list of registration information (merchandise name, an amount of money, and the like) relating to merchandise which is registered as a purchase target, the subtotal amount of money, various types of menus, a button for inputting a command, and the like. As the display device, for example, a well-known device such as a color liquid crystal display (LCD) may be used. The touch sensor is disposed so as to overlap with a display surface of the display device. The touch sensor detects a touched position on the display surface of the display device by an operator, and transmits the detected position information to the CPU 40. As the touch sensor, a well-known device may be used.

The change device 47 receives coins and bills which are inserted into the change device 47. The change device 47 discharges coins and bills which correspond to a change.

The communication unit 48 performs communication between the store computer 14 and the register 10 through a LAN 13.

As the printer 49, for example, a thermal printer, a dot impact printer, or the like is used. The printer 49 prints various character strings, an image, or the like on a sheet for a receipt, so as to issue a receipt and the like.

The card reader and writer 50 reads data recorded in a card and writes data in the card. As the card, various cards in which information regarding payment processing is recorded, such as a membership card and a point card may be included in addition to a payment card such as a credit card, a debit card, an electronic money card, and a prepaid card. The card reader and writer 50 may be a device of a magnetic type, a contact type, or a non-contact type. The card reader and writer 50 may include plural types of devices.

A motion sensor and the like may be provided in the payment machine 12. The motion sensor may detect that a shopper 4 is near the payment machine 12.

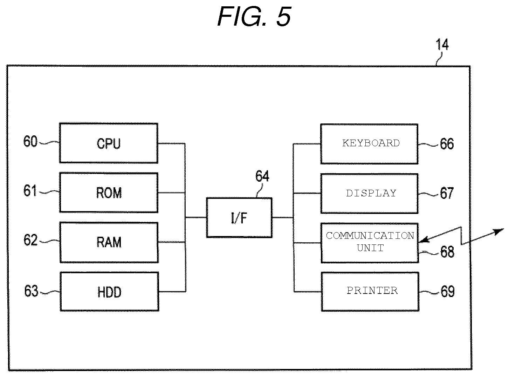

FIG. 5 is a block diagram illustrating a configuration of the store computer 14 according to the embodiment.

The store computer 14 includes a central processing unit (CPU) 60, a read-only memory (ROM) 61, a random-access memory (RAM) 62, a hard disk drive (HDD) 63, an interface (I/F) unit 64, a keyboard 66, a display 67, a communication unit 68, and a printer 69.

The CPU 60 controls the units to conduct various operations of the store computer 14, based on an operating system, middleware, and an application program which are recorded in the ROM 61 and the RAM 62.

Data referred when the CPU 60 performs various types of processing is recorded in the ROM 61 and the RAM 62, in addition to various programs executed by the CPU 60. Various types of data including a registration information list which is transmitted to the payment machine 12 from the register 10, registration confirmation information, and the like are temporarily recorded in the RAM 62. The registration confirmation information is received by a notification from the register 10 and indicates completion of the registration processing.

The program executed by the CPU 60 includes a control program for managing operation statuses of the plurality of registers 10, and the payment machine 12, and a control program for performing, for example, the following processing: processing of receiving a registration information list (registration information correlated with a transaction ID) from the register 10; processing of transmitting the registration information list received from the register 10, to the payment machine 12; and processing of transmitting registration confirmation information received from the register 10, to the payment machine 12 which performs payment processing.

The HDD 63 corresponds to an auxiliary storage part of the computer. The HDD 63 stores data used when the CPU 60 performs various types of processing, or data generated by processing of the CPU 60. Instead of the HDD 63, for example, a solid state drive (SSD) and the like may be used.

The interface (I/F) unit 64 transfers data so as to be received and transmitted between the CPU 60, the ROM 61, the RAM 62, and the HDD 63, the communication unit 68, the display 67, and the printer 69. As the I/F unit 64, for example, a well-known I/F unit which includes various buses such as a system bus, and various interface circuits for connecting the buses and the above units may be used.

Numeric keys for inputting an amount of money, a calculation key for performing calculation such as the subtotal and the total, keys for inputting various commands, merchandise keys to which plural items of merchandise may be assigned, and the like are provided in the keyboard 66. The keyboard 66 outputs a command in accordance with an operation corresponding to each of the above-described keys.

The display 67 is configured with the well-known display such as a liquid crystal display (LCD), for example. The display 67 displays a certain screen such as a graphical user interface (GUI) screen. For example, the display 67 displays a screen for managing operation statuses of the register 10 and the payment machine 12, a screen for managing a selling situation of merchandise, and the like.

The communication unit 68 performs communication between the register 10 and the payment machine 12 through a LAN 13.

The printer 69 may be, for example, a thermal printer, a dot impact printer, and the like. The printer 69 prints various types of data.

Next, an operation of the merchandise sales data processing system according to the embodiment will be described.

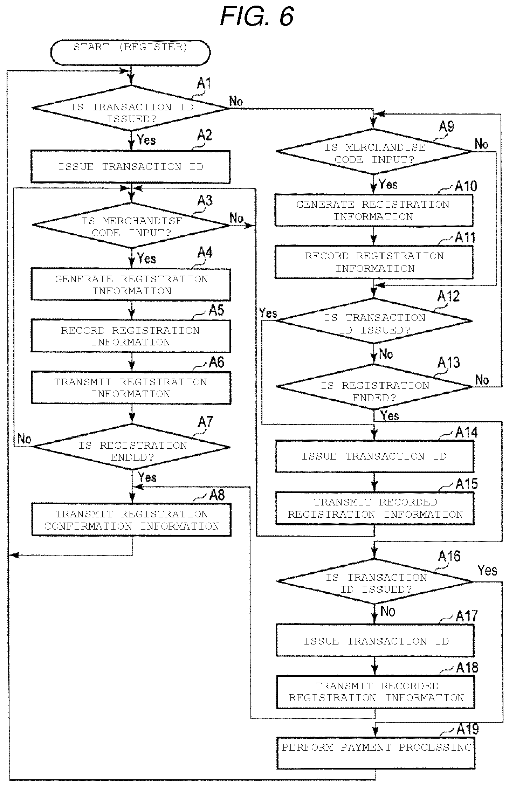

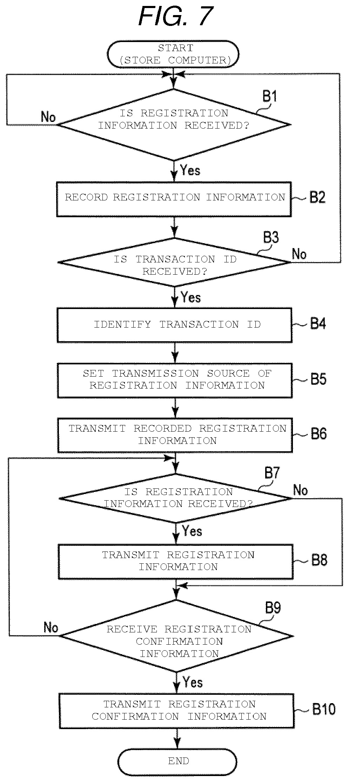

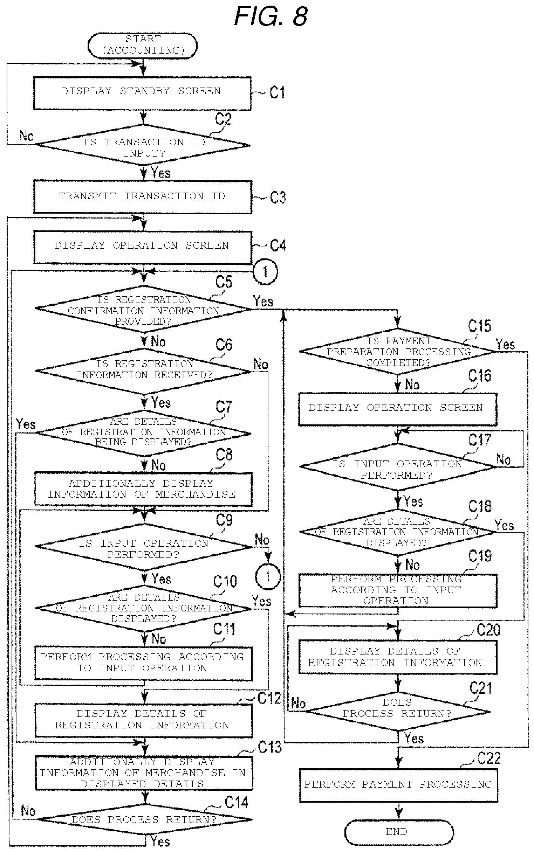

FIG. 6 is a flowchart illustrating an operation of the register 10 according to the embodiment. FIG. 7 is a flowchart illustrating an operation of the store computer 14 according to the embodiment. Fig. 8 is a flowchart illustrating an operation of the payment machine 12 according to the embodiment.

Firstly, registration processing in the register 10 will be described with reference to the flowchart illustrated in Fig. 6.

If a shopping basket 7 is placed on the counter table 5 by a shopper 4, the checker 2 performs an operation for causing the register 10 to issue a transaction ID. If the CPU 20 detects an issue instruction of the transaction ID by the operation of the checker 2 (Act A1, Yes), the CPU 20 issues a transaction ID specific to one transaction (Act A2). The register 10 in the embodiment may issue a transaction ID specific to one transaction, in accordance with an instruction to issue the transaction ID, before an instruction (operation on the settlement key) indicating that generation of registration information in one transaction is ended is input, i.e., before generation of registration information in one transaction is started, and even before generation of pieces of registration information for all items of merchandise which are set as a purchase target after generation of registration information has started.

Regarding the issue of a transaction ID, for example, a method using a recording medium such as a membership card, which belongs to the shopper 4 may be provided as a first method. In addition, a method of causing the register 10 to independently perform the issue without using the recording medium such as a membership card may be provided as a second method.

In the first method, the checker 2 receives, for example, the membership card from the shopper 4, and causes the card reader and writer 30 to read data which is electronically recorded in the membership card, for example, data indicating a membership number specific to the shopper 4. If the CPU 20 detects that the card reader and writer 30 reads the data (membership number) of the membership card, the CPU 20 determines that an instruction to issue a transaction ID is input. The CPU 20 generates a transaction ID specific to the current transaction, based on the data which is previously read by the card reader and writer 30. For example, the CPU 20 may use a membership number itself as a transaction ID, or may generate a transaction ID so as to include the membership number. The CPU 20 may use data which is uniquely generated in accordance with a predetermined rule, based on the membership number, as the transaction ID.

When the first method is used, a medium used in the first method is not limited to a medium in which data is electronically recorded, such as a membership card. In addition, articles of a code (such as a two-dimensional code) which indicates a membership number and the like specific to a shopper 4, characters, or the like which are printed on a sheet medium may be used. When the sheet medium is used, the register 10 generates a transaction ID based on a code or characters which are optically read by the scanner 25.

If the transaction ID for the shopper 4 is generated based on data read from the membership card, by using the first method, the CPU 20 issues the generated transaction ID (Act A2). That is, the CPU 20 causes a screen for notifying the checker 2 of the transaction ID and the issue of the transaction ID to be displayed on the touch panel 27. As will be described below, when the CPU 20 generates registration information based on a merchandise code read from merchandise, the CPU 20 records the transaction ID in the registration information list, in association with the generated registration information.

If the transaction ID is issued by the first method, the shopper 4 causes the payment machine 12 to read a medium such as a membership card, which is used in issuing the transaction ID, when payment processing is performed in the payment machine 12. Thus, the payment machine 12 is switched from the standby state where an input operation for payment processing is not received, to a state where starting of the payment processing (payment preparation processing) is allowed.

In the first method, a card which is previously held, such as a membership card is used, and thus it is possible to suppress consumption of a receipt sheet, and to suggest using of a membership card in the payment processing, to the shopper 4. In the first method, a card to be used is not limited to the membership card and a card which allows writing (recording) of data may be used. If this type of card is used, the CPU 20 records data indicating the generated transaction ID, in the card. The shopper 4 causes the payment machine 12 to read the card in which the transaction ID is recorded, and switches the state of the payment machine 12 from the standby state to the state where starting payment processing is allowed.

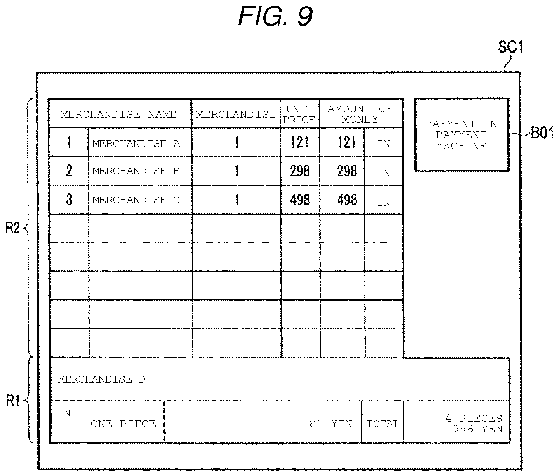

The second method may be used, for example, for a shopper 4 who does not hold the membership card and the like. In the second method, if an operation on a key (or button) (see Fig. 9) provided in the keyboard 26 or the touch panel 27 is detected, the checker 2 determines that an instruction to issue a transaction ID is input.

The CPU 20 determines a transaction ID specific to the current transaction, according to the instruction by the operation of the checker 2. For example, the CPU 20 generates a transaction ID in accordance with an algorithm. The algorithm causes the generated transaction ID not to overlap with transaction IDs issued in other registers 10.

If the transaction ID for the shopper 4 is generated by using the second method, the CPU 20 issues the generated transaction ID (Act A2). That is, for example, the CPU 20 generates a two-dimensional code indicating the transaction ID and causes the printer 29 to print the generated two-dimensional code on a receipt sheet. The CPU 20 causes a screen for notifying the checker 2 of the transaction ID and the issue of the transaction ID, in the touch panel 27 to be displayed. As will be described below, when the CPU 20 generates registration information based on a merchandise code read from merchandise, the CPU 20 records the transaction ID in the registration information list, in association with the generated registration information.

If the transaction ID is issued by the second method, the shopper 4 causes the payment machine 12 to read the receipt on which the two-dimensional code indicating the transaction ID is printed, when payment processing is performed in the payment machine 12. Thus, the payment machine 12 is switched from the standby state where an input operation for payment processing is not received, to a state where starting the payment processing (payment preparation processing) is allowed. A letter such as a number, a sign, a pattern, or the like may be printed as information indicating the transaction ID on a receipt sheet, in addition to the two-dimensional code.

In the second method, similarly to a shopper 4 who holds the membership card and the like, for a shopper 4 who does not hold the membership card and the like, it is also possible to cause the shopper 4 to use the checkout system.

In all of the above-described first method and second method, a transaction ID is issued according to the operation of the checker 2. However, an operation of an instruction to issue a transaction ID by a shopper 4 may be detected, and thus the transaction ID may be issued. In this case, a touch panel or a keyboard for receiving the operation of the shopper 4 is provided in the register 10. In addition, a card reader and writer which can read a card such as a membership card by the operation of the shopper 4 is provided in the register 10.

For example, when payment processing is performed by an operation of a shopper 4 in the payment machine 12, the shopper 4 performs an operation on the touch panel or the keyboard, or an operation of causing the card reader and writer to read data of the membership card. The CPU 20 detects an operation by the shopper 4, and performs the processing for issuing a transaction ID in a manner similar to the above descriptions.

In this manner, the transaction ID can be issued by an operation of the shopper 4, and thus the checker 2 can immediately start the scan operation for performing the registration processing on the merchandise in the shopping basket 7 placed on the counter table 5, without performing the operation of issuing the transaction ID. Thus, it is possible to reduce a time until the registration processing is completed by an operation of the checker 2.

In the checkout system according to the embodiment, as described above, if a transaction ID is issued in the register 10, the shopper 4 can move to the payment machine 12 and cause the payment machine 12 to read the transaction ID before the registration processing in the register 10 is completed (for example, during a period when the settlement key is not operated). Thus, the shopper 4 can cause the payment machine 12 to start the payment processing. Details of the payment processing will be described later (FIG. 8).

After the CPU 20 issues the transaction ID, if the CPU 20 detects that the scanner 25 reads information (merchandise code) of merchandise by the scan operation (registration operation) of the checker 2 (Act A3), the CPU 20 receives data (merchandise name, net amount of money, and other types of data) relating to merchandise which corresponds to the read merchandise code, from the store computer 14. The CPU 20 generates registration information to be subjected to the payment processing (Act A4). The CPU 20 correlates the registration information which is generated based on a merchandise code of one item of merchandise, with a transaction ID, and adds pieces of the correlated information, to the registration information list recorded in RAM 22 (Act A5).

The CPU 20 transmits the registration information correlated with the transaction ID, to the store computer 14 (Act A6). That is, when the transaction ID is completely issued, the payment processing may be started in the payment machine 12. Thus, before generating pieces of registration information regarding all items of merchandise is ended, the CPU 20 transmits registration information to the store computer 14 every time the registration information corresponding to one item of merchandise is generated. The CPU 20 adds registration information (merchandise name, amount of money, and the like) relating to merchandise which is registered as a purchase target, the subtotal amount of money, and the like to a list on a registration screen, which is displayed on the touch panel 27.

FIG. 9 is a diagram illustrating an example of a registration screen SC1 displayed on the register 10 in the embodiment.

The registration screen SC1 illustrated in FIG. 9 includes regions R1 and R2. The region R1 is a region for displaying the following items: a merchandise name, the number of pieces, and a unit price relating to merchandise which is lastly registered in a registered merchandise table; and the total number of pieces and the total amount of money of pieces of sales merchandise after the merchandise is registered. The region R2 is a region for displaying a list of a merchandise name, the number of pieces, a unit price, and an amount of money relating to merchandise which is registered prior to the merchandise shown in the region R1. An payment-machine payment button B01 is provided on the registration screen SC1. The payment-machine payment button B01 is used for starting payment processing in the payment machine 12 during the registration processing (before the settlement key is operated).

The checker 2 repeats the scan operation for each item of merchandise which is in the shopping basket 7, in a manner similar to the above descriptions. The CPU 20 generates registration information regarding each item of merchandise, and subsequently transmits pieces of registration information to the store computer 14 (Acts A3 to A6).

If the scan operation for all items of merchandise is ended, the checker 2 inputs an instruction indicating that generation of registration information in one transaction is ended, by an operation on the keyboard 26 or the touch panel 27 (for example, operation on the settlement key). If the CPU 20 detects the instruction which is input by an operation of the checker 2 and indicates that generation of registration information is ended (Act A7, Yes), the CPU 20 transmits registration confirmation information to the store computer 14, and thus notifies the store computer 14 to end the generation of registration information in one transaction (Act A8).

In the foregoing descriptions, the transaction ID is issued before the scan operation for merchandise (reading operation of merchandise information) is started. However, the transaction ID may be issued after the scan operation is started and before the registration processing is completed. For example, when the number of shoppers 4 who wait in order at the register 10 is small, basically, when the checker 2 is caused to perform payment processing in the register 10 (a transaction ID is not issued before the scan operation), and thus complexness occurs, the shopper 4 may be caused to perform the payment processing in the payment machine 12, in accordance with determination of the checker 2. Accordingly, after the scan operation is started, when the shopper 4 desires payment processing in the payment machine 12, the shopper 4 may be caused to start the payment processing in the payment machine 12, at this time.

Before the CPU 20 detects an instruction to issue a transaction ID (Act A1, No), if the CPU 20 detects that the scanner 25 reads information (merchandise code) of merchandise by the scan operation of the checker 2 (ActA9, Yes), the CPU 20 generates registration information based on the merchandise code in a manner similar to the above descriptions (Act A10). The CPU 20 correlates the generated registration information with a transaction ID, and adds pieces of the correlated information to the registration information list recorded in the RAM 22 (Act A11). When a transaction ID is not issued, registration information generated in the register 10 may be subjected to payment processing in the register 10 instead of the payment machine 12. Thus, the CPU 20 does not immediately transmit the registration information to the store computer 14.

The checker 2 repeats the scan operation for each item of merchandise which is in the shopping basket 7 and is a purchase target, in a manner similar to the above descriptions. The CPU 20 generates registration information regarding each item of merchandise, based on a merchandise code which is read by the scanner 25, and adds the generated registration information to the registration information list recorded in the RAM 22 (Acts A9 to A11).

During a period when an instruction indicating that generation of registration information in one transaction is ended by an operation of the checker 2 is not input after an input of the merchandise code is started (Act A13, No), if the CPU 20 detects an instruction to issue a transaction ID (Act A12, Yes), the CPU 20 issues a transaction ID specific to one transaction (Act A14). That is, before generation of registration information regarding all items of merchandise to be purchased is completed, the CPU 20 may issue a transaction ID according to the instruction to issue the transaction ID.

For example, if the keyboard 26 or the touch panel 27 is operated by the checker 2 or the membership card is read by the checker 2, and thus the CPU 20 detects the instruction to issue the transaction ID, the CPU 20 issues the transaction ID in a manner similar to the above descriptions. For example, as illustrated in FIG. 9, the CPU 20 causes the payment-machine payment button B01 to be displayed on the registration screen SC1 which is displayed during the scan operation. The checker 2 may operate the payment-machine payment button B01 so as to input an instruction to issue a transaction ID. As described above, the instruction to issue a transaction ID may be input by an operation of a shopper 4. Thus, the shopper 4 moves to the payment machine 12 during a period when the scan operation continues by the checker 2. The shopper 4 inputs a transaction ID (for example, reads a membership card), and thus the state of the payment machine 12 transitions from the standby state to the state where starting the payment processing is allowed. Accordingly, the payment preparation processing including various types of necessary processing may be started before the payment processing. The payment processing is processing for collecting payment for the total price after generation of pieces of registration information regarding all items of merchandise in one transaction is completed in the register 10 (settlement operation).

If the CPU 20 detects the instruction to issue the transaction ID (Act A12, Yes), the CPU 20 issues a transaction ID specific to one transaction (Act A14). Then, the CPU 20 transmits registration information which is completely recorded in the registration information list recorded in the RAM 22, to the store computer 14 in association with a transaction ID (Act A15).

Then, the CPU 20 generates registration information regarding each item of merchandise, based on the merchandise code which is read by the scanner 25. The CPU 20 adds the generated registration information to the registration information list recorded in the RAM 22, and transmits the registration information to the store computer 14 every time the registration information is generated (Acts A3 to A7).

If the CPU 20 detects the instruction (operation on the settlement key) indicating that generation of registration information is ended (Act A7, Yes), the CPU 20 transmits registration confirmation information to the store computer 14, and thus notifies the store computer 14 to end the generation of registration information in one transaction (Act A8).

When the instruction to issue the transaction ID is not detected (Act A12, No), and an instruction which is input by an operation of the checker 2 and indicates that generation of registration information is ended, is detected (Act A13, Yes), the CPU 20 determines whether a transaction ID is issued at this time, that is, whether the shopper 4 causes the payment machine 12 to perform payment processing.

For example, when complexness occurs, and thus the checker 2 causes the shopper 4 to perform payment processing in the payment machine 12, a key (or a button) provided in the keyboard 26 or the touch panel 27 is operated, and thus an instruction to issue a transaction ID is input. In addition, when the instruction indicating that the generation of registration information is ended is detected, setting indicating whether or not a transaction ID is issued may be performed in advance, and the CPU 20 may refer to the setting details.

When the CPU 20 determines that a transaction ID is not issued (Act A16, No), the CPU 20 issues a transaction ID specific to a transaction in which generation of pieces of registration information for all items of merchandise is completed (Act A17). The CPU 20 transmits registration information which is completely recorded in the registration information list recorded in the RAM 22, to the store computer 14 in association with a transaction ID (Act A18), and transmits registration confirmation information. Thus, the CPU 20 notifies the store computer 14 that generation of registration information in one transaction is ended (Act A8).

When the CPU 20 determines that the transaction ID is issued (Act A16, Yes), the CPU 20 performs payment processing on a transaction in which generation of pieces of registration information regarding all items of merchandise is completed (Act A19). That is, the CPU 20 performs the payment preparation processing including selection (cash, a credit card, and the like) of a payment method in accordance with an operation of the checker 2, and then collects payment for the total amount of money to be paid. Specific details of the payment preparation processing will be described later.

In this manner, when a transaction ID is issued before the scan operation is started, the register 10 in the embodiment transmits registration information to the store computer 14 every time the registration information is generated based on the input merchandise code. When the register 10 issues a transaction ID during a period when an instruction indicating that generation of registration information is ended is not input (e.g., the settlement key is not operated) after the scan operation is started, the register 10 transmits registration information which is completed before the transaction ID is issued, to the store computer 14, and then transmits registration information to the store computer 14 every time the registration information is generated based on the input merchandise code.

Further, when the instruction indicating that generation of registration information is ended is input without issuing a transaction ID, the register 10 in the embodiment may select whether to issue the transaction ID and cause the shopper 4 to perform the payment processing in the payment machine 12 or to perform the payment processing in the payment machine 12 at this time.

In the foregoing descriptions, in any of the first method and the second method, before the scan operation is started (before a merchandise code is input), a transaction ID is issued in accordance with an operation by the checker 2 or the shopper 4. However, in the second method, the transaction ID may be issued in accordance with a detection of other inputs. For example, when an operation of the settlement key is detected in the previous transaction (when an instruction to end a registration operation for a shopper 4 who previously lined up is input), the register 10 may issue a transaction ID corresponding to the next transaction. However, this is assumed to be limited to a case where there is a payment machine 12 in an empty state (payment machine 12 which can perform payment processing for the next transaction). The register 10 receives a notification indicating that the payment machine 12 is in the empty state (the payment processing by the shopper 4 is ended) through, for example, the store computer 14. Then, the register 10 issues a transaction ID in accordance with reception of this notification. In this case, the payment processing may be started in the payment machine 12 from a time before the scan operation by the checker 2 is started, without waiting for an operation by the checker 2 or a shopper 4. The checker 2 and the shopper 4 are notified that the payment machine 12 is in a state of enabling the payment processing (payment preparation processing) to be performed, by using display, sound, and the like in the register 10 or the payment machine 12.

After the scan operation is started, for example, when an input (detection of a merchandise code by the scanner) of merchandise information is detected, when it is detected that a setting period elapses, on the basis of an input start of merchandise information, and when, as described above, a notification indicating that the payment machine 12 is in the empty state (the payment processing by the shopper 4 is ended) is received, a transaction ID may be also issued.

Next, transfer processing of transferring registration information in the store computer 14 will be described with reference to the flowchart illustrated in FIG. 7. For simple descriptions, descriptions will be made by using the following situation as a target: registration information is received from one register 10, and the registration information received from the register 10 is transmitted to one payment machine 12 which is determined from the plurality of payment machines 12-1, ..., 12-n.

If the CPU 60 receives registration information correlated with a transaction ID, from the register 10 (Act B1, Yes), the CPU 60 records the received registration information in, for example, the RAM 62 or the HDD 63 (Act B2). As described above, when a transaction ID is issued before an instruction (operation on the settlement key) indicating that generation of registration information is ended is input, the register 10 transmits (plural pieces of) registration information which is complete every time the registration information is generated based on the input merchandise code or before the transaction ID is issued, to the store computer 14. The CPU 60 subsequently records registration information received from the register 10 until a payment machine 12 which performs payment processing for registration information received from a transfer destination for the registration information, that is, from the register 10 is determined (Acts B1 and B2).

The payment machine 12 transmits a transaction ID to the store computer 14 in accordance with an operation by the shopper 4, when a recording medium such as a membership card is read or a two-dimensional code indicating the transaction ID which is printed on a receipt sheet is read so as to input the transaction ID. Details will be described later (FIG. 8, Act C2).

When the CPU 60 receives a transaction ID by any of the payment machines 12 (Act B3, Yes), the CPU 60 recognizes whether registration information which corresponds to the transaction ID and is to be subjected to payment processing (Act B4). For example, the CPU 60 determines whether the transaction ID received from the payment machine 12 coincides with a transaction ID correlated with registration information received from the register 10.

When it is determined that the transaction IDs do not coincide with each other, the CPU 60 transmits a response that the transaction ID is not right (registration information to be subjected to the payment processing is not provided) to the payment machine 12 of a transmission source of the transaction ID.

When it is determined that the transaction IDs coincide with each other, the CPU 60 sets the payment machine 12 of a transmission source of the transaction ID, to be a transmission destination for registration information correlated with the same transaction ID (Act B5). That is, the CPU 60 sets one payment machine 12 which perform payment processing for registration information correlated with the transaction ID which is received from the register 10. The CPU 60 instructs the set payment machine 12 to start the payment processing. Then, the CPU 60 transmits registration information which is complete before a transmission destination for the registration information is set, to the payment machine 12 which is set as a transmission destination (Act B6).

Generally, the checker 2 may perform the scan operation for plural items of merchandise during a period until the shopper 4 moves to the payment machine 12 from the register 10 and performs payment processing (starts payment preparation processing). Thus, pieces of registration information for plural items of merchandise are completely recorded in the store computer 14 at a time when the shopper 4 inputs a transaction ID in the payment machine 12, and the transaction ID is recognized in the store computer 14. Accordingly, the CPU 60 collects plural pieces of recorded registration information, and transmits the collection to the payment machine 12 just after the CPU 60 sets a payment machine 12 as a transmission destination for registration information. Then, the CPU 60 receives registration information from the register 10 every time the registration information is generated in the register 10 (Act B7, Yes). The CPU 60 transmits (transfers) the received registration information to the payment machine 12 each time the registration information is received (Act B8).

When a payment machine 12 which performs an instruction to start payment processing (payment machine 12 which is subjected to the payment processing by a shopper 4) is set, the CPU 60 may notify the register 10 which functions as a transmission source of registration information, of the payment machine 12. The register 10 may display information on, for example, the registration screen SC1 displayed on the register 10, and may notify the checker 2, in accordance with a notification from the store computer 14. The displayed information is information such as a payment machine number, which indicates a payment machine 12 which performs payment processing. The register 10 may perform a display for a shopper 4 who waits for registration processing. The display is for a notification of a payment machine 12 in the process of performing the payment processing.

If generation of pieces of registration information for all items of merchandise which are set as a target of one transaction is completed in the register 10, and thus the CPU 60 receives registration confirmation information (Act B9, Yes), the CPU 60 transmits registration confirmation information for a notification of completing the registration processing, to the payment machine 12 (Act B10).

In this manner, the store computer 14 in the embodiment may record pieces of registration information transmitted from the register 10 until a payment machine 12 which functions as a transmission destination is confirmed, and transmit the registration information after the payment machine 12 which functions as a transmission destination is set. The store computer 14 may transfer registration information received after that, to the payment machine 12 each time the registration information is received. Thus, in payment processing of the payment machine 12, which will be described below, a status (information of merchandise subjected to the scan operation) of registration processing in the register 10 during a period until the registration processing is completed may be provided for the shopper 4.

Next, payment processing in the payment machine 12 will be described with reference to the flowchart illustrated in Fig. 8.

The payment machine 12 displays a wait screen indicating a standby state in the touch panel 46, in the standby state where an input operation for payment processing (payment preparation processing) is not received (Act C1). Only processing for inputting a transaction ID issued in the register 10 can be performed in the payment machine 12 in the standby state. Specifically, the payment machine 12 can cause the card reader and writer 50 to scan a recording medium (a membership card and the like used when a transaction ID is generated in the register 10) or can cause the scanner 45 to scan a receipt sheet on which a two-dimensional code indicating a transaction ID is printed, in the standby state.

If a transaction ID is issued in the register 10, the shopper 4 may move to the payment machine 12 and perform an operation for inputting a transaction ID in order to start the payment processing, before the registration processing is completed. When the transaction ID is issued by using the above-described first method or second method, the shopper 4 may arbitrarily select a payment machine 12 in the empty state, i.e., not being operated by another shopper 4.

When the transaction ID is issued by using the first method, the shopper 4 causes the card reader and writer 50 to read, for example, the membership card which is used in issuing the transaction ID (Act C2, Yes). The CPU 40 confirms whether the transaction ID is issued based on data which is read from the membership card by the card reader and writer 50, and indicates a membership number specific to the shopper 4. For example, the CPU 40 generates the transaction ID based on the data read from the membership card, and transmits the generated transaction ID to the store computer 14, as in the register 10 (Act C3). As a result of transmitting the transaction ID, if an instruction to start payment processing is received from the store computer 14, the CPU 40 may confirm that a transaction ID which is correlated with registration information to be subjected to the payment processing, and is specific to one transaction is issued.

At this time, when a message that the transaction ID transmitted to the store computer 14 is not right is received as a response, the CPU 40 continues the standby state. In the standby state, for example, a message for notifying the shopper 4 that the transaction ID is not right (performing the payment processing is not possible) is displayed on the touch panel 46 or is output by using sound for a predetermined period.

In the foregoing descriptions, the payment machine 12 transmits the transaction ID which is generated based on the data read from the membership card, to the store computer 14. As a result, if the instruction to start payment processing is performed, the payment machine 12 confirms that the transaction ID correlated to registration information which is to be subjected to the payment processing is issued. However, the payment machine 12 may confirm that the transaction ID is issued, by using other methods.

For example, the transaction ID issued by the register 10 is transmitted to all payment machines 12. As described above, the CPU 40 of the payment machine 12 generates a transaction ID based on data read from the membership card, similarly to the register 10. The CPU 40 determines whether the generated transaction ID coincides with the transaction ID issued by the register 10. As a result, when the transaction IDs coincide with each other, the CPU 40 may confirm that the transaction ID specific to one transaction is issued in the register 10. When the transaction IDs coincide with each other, the CPU 40 transmits the determined transaction ID to the store computer 14, and requires transmission of registration information correlated with the transaction ID.

The CPU 40 receives the registration information corresponding to the transaction ID, from the store computer 14. The CPU 40 displays an operation screen for receiving an input operation for the payment processing (payment preparation processing), in the touch panel 46 instead of the wait screen indicating the standby state (Act C4).

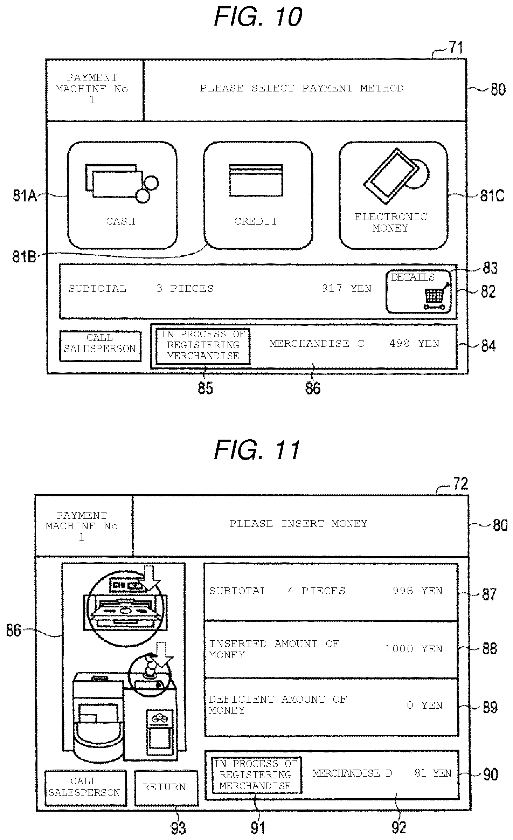

FIG. 10 is a diagram illustrating an example of the operation screen displayed on the touch panel 46 of the payment machine 12 in the embodiment. The operation screen 71 illustrated in FIG. 10 is a screen for causing the shopper 4 to select a payment method. A message 80 and buttons 81A, 81B, and 81C are displayed on the operation screen 71. The message 80 is used for describing an operation on the operation screen. The buttons 81A, 81B, and 81C are used for selecting any of cash, a credit card, and electronic money as a payment method.

Further, a subtotal display region 82 and a merchandise information display region 84 for displaying a status of registration processing in the register 10 are provided in the operation screen 71.

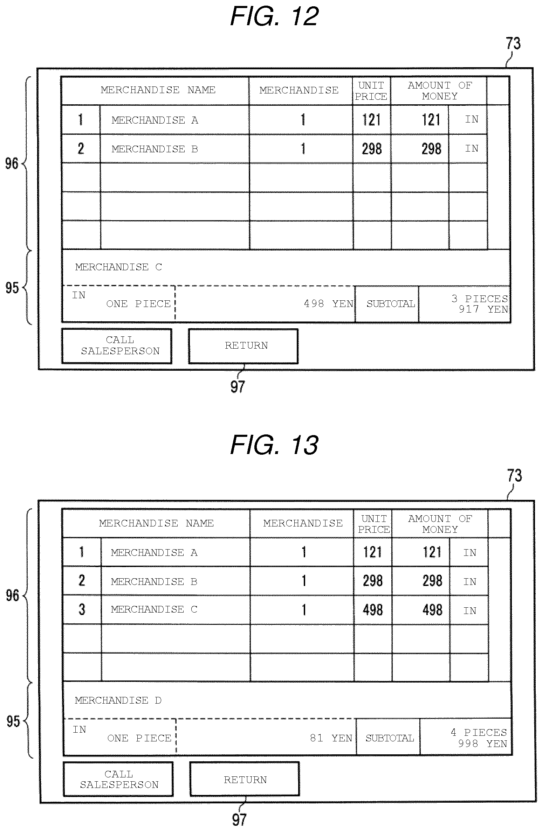

The number of items of merchandise of which registration information is complete in the register 10, and the subtotal amount of money of merchandise are displayed in the subtotal display region 82. In addition, a detail button 83 is provided in the subtotal display region 82. The detail button 83 is used for displaying a list (details of registration information) for merchandise of which registration information is completely generated. A specific example of the details of merchandise will be described later (FIGS. 12 and 13).

A message 85 indicating an operation state of the register 10, and information 86 of merchandise which is registered lastly is displayed in the merchandise information display region 84. A message of "in the process of registering merchandise" is displayed as the message 85 on the operation screen 71 illustrated in FIG. 10. The message indicates that the registration processing is being performed in the register 10. When the settlement key is operated in the register 10, for example, a message 85 of "completion of merchandise registration" is displayed. As the information 86 of merchandise, for example, a merchandise name of "merchandise C" and the amount of money of "498 YEN" are displayed.

If the CPU 40 receives registration information from the store computer 14 (Act C6, Yes), when details of the received registration information are not displayed (Act C7, No), that is, when the operation screen as illustrated in FIG. 10 is displayed, the CPU 40 updates the subtotal display region 82 and the merchandise information display region 84 in accordance with the received registration information. That is, the CPU 40 additionally displays the merchandise name and the amount of money in the received registration information, in the merchandise information display region 84, and updates the number of pieces and the subtotal amount of money in the subtotal display region 82 (Act C8).

When the operation screen is being displayed, as described above, the CPU 40 updates the subtotal display region 82 and the merchandise information display region 84 every time registration information is received from the store computer 14. Thus, the shopper 4 can recognize a registration status of merchandise in the register 10, with operating the operation screen.

When the CPU 40 detects that the shopper 4 operates the operation screen 71 (Act C9, Yes), the CPU 40 determines whether the detail button 83 is operated, that is, an instruction to perform detail display of registration information is received. Here, when the shopper 4 operates a portion of the operation screen 71 other than the detail button 83 (Act C10, No), the CPU 40 performs processing in accordance with an input operation (Act C11). For example, it is assumed that the button 81A for selecting cash as a payment method is touched on the operation screen 71 by the shopper 4. In this case, the CPU 40 detects an operation on the button 81A, and switches a display to an operation screen for inserting cash.

FIG. 11 is a diagram illustrating an example of an operation screen 72 displayed on the touch panel 46 of the payment machine 12 in the embodiment. The operation screen 72 illustrated in FIG. 11 is a screen for demanding the shopper 4 to insert cash. A message 80 for describing an operation on the operation screen 72, and an operation guide 86 for describing an operation method for the shopper 4 are displayed on the operation screen 72.

A subtotal display region 87 (including the subtotal display region 82) and a merchandise information display region 90 (including a message 91 and information 92 of merchandise) are provided on the operation screen 72 in order to display a status of registration processing in the register 10. The message 91 indicates an operation state of the register 10. It is assumed that pieces of information which are similar to those in the subtotal display region 82 and the merchandise information display region 84 which are shown in the above-described operation screen 71 are displayed on the subtotal display region 87 and the merchandise information display region 80. Thus, descriptions thereof will be omitted.

The inserted amount of money 88 indicating the sum of bills and coins inserted by operation of the shopper 4, and the deficient amount of money 89 indicating a difference between the current subtotal amount of money and the inserted amount of money are displayed on the operation screen 72. The deficient amount of money 89 is updated according to the subtotal amount of money which is updated by generating registration information in the register 10, and the amount of money which is actually inserted by the shopper 4. The shopper 4 refers to the deficient amount of money 89, and thus can easily recognize the amount of money required to be additionally inserted. A return button 93 for returning to the previous operation screen is provided on the operation screen 72.

When it is detected that the detail button 83 provided on the operation screen 71 is operated (Act C10, Yes), the CPU 40 changes display from the operation screen 71 to details (list) of registration information in the touch panel 46 (Act C12).

FIG. 12 is a diagram illustrating an example of the detail screen of registration information displayed on the touch panel 46 of the payment machine 12 in the embodiment. A list of pieces of registration information is displayed on the detail screen 73 illustrated in FIG. 12. The pieces of registration information are completely generated by the register 10 (pieces of registration information which are completely received from the store computer 14) before registration for one transaction is ended. A merchandise information display region 95 and a merchandise information list display region 96 are provided on the detail screen 73 illustrated in FIG. 12. For example, information of merchandise which is registered lastly is displayed in the merchandise information display region 95. Information of merchandise which is completely registered ahead of the merchandise in the information displayed in the merchandise information display region 95 is displayed in the merchandise information list display region 96. A return button 97 for returning to the operation screens 71 and 72 is provided on the detail screen 73.

For example, a merchandise name, the number of pieces, and the unit price regarding merchandise, and the total number of pieces and the subtotal amount of money of registered merchandise after the merchandise is registered are displayed in the merchandise information display region 95. A list of a merchandise name, the number of pieces, the unit price, and the amount of money regarding each piece of registered merchandise except for merchandise displayed in the merchandise information display region 95 is displayed in the merchandise information list display region 96.

When the CPU 40 receives registration information regarding one item of merchandise, from the store computer 14 (Act C6, Yes), if the detail screen 73 is in the process of being displayed (Act C7, Yes), the CPU 40 additionally displays new received registration information in the detail screen 73 (Act C13). That is, the CPU 40 adds information displayed in the merchandise information list display region 96 to a list in the merchandise information list display region 96, and displays information of merchandise corresponding to the new received registration information, in the merchandise information display region 95.

FIG. 13 is a diagram illustrating an example of the detail screen which has added registration information, and displayed on the touch panel 46 of the payment machine 12 in the embodiment. In FIG. 13, information of "merchandise D" is displayed in the merchandise information display region 95, and information of "merchandise C" displayed in the merchandise information display region 95 of the detail screen 73 illustrated in FIG. 13 is added in the merchandise information list display region 96.

When it is not detected that the return button 97 on the detail screen 73 is operated (Act C14, No), the CPU 40 continues display of the above-described detail screen 73. When it is detected that the return button 97 on the detail screen 73 is operated (Act C 14, Yes), the CPU 40 returns to a state where the operation screen is displayed, and which is a state before switching to display of the detail screen 73 is performed (Act C4).

The CPU 40 confirms whether registration confirmation information is received from the store computer 14, during a period when the operation screen or the detail screen is displayed in accordance with an input operation of the shopper 4 (Act C5). As described above, the CPU 40 performs payment preparation processing in accordance with an operation of the shopper 4 (Acts C4 to C14), during a period when the registration confirmation information is not received from the store computer 14 (Act C5, No). When the registration information is received from the store computer 14 (Act C6, Yes), the CPU 40 additionally displays the new received registration information in the operation screen or the detail screen during this period.

Thus, the shopper 4 can confirm a status of the registration processing on the operation screen or the detail screen in the register 10, that is, confirm registered merchandise, the subtotal amount of money, and the like in real time.

The CPU 40 may perform payment preparation processing as follows, which is required for payment processing, according to an operation of the shopper 4, during a period when the registration confirmation information is not received from the store computer 14 (Act C5, No), that is, during a period prior to an instruction to end generation of registration information in the register 10 is performed.

For example, when the payment is in cash, the shopper 4 operates the above-described operation screens 71 and 72, and thus may designate payment in cash to the payment machine 12, and then take coins or a bill from a wallet, and insert the taken coins or bill into the change device 47. Information of merchandise is additionally displayed in the subtotal display regions 82 and 87, and the merchandise information display regions 84 and 90 on the touch panel 46 in real time, every time registration information regarding one item of merchandise is generated in the payment machine 12. Accordingly, the shopper 4 can predict the total amount of money, and insert the amount of money required for paying in advance. In this case, the CPU 40 causes the coins or the bill inserted into the change device 47 to be stored, and causes the inserted amount of money 88 and the deficient amount of money 89 to be displayed on the operation screen 72.

When the subtotal amount of money of the registered merchandise exceeds the inserted money, the CPU 40 may output a message for demanding the shopper 4 of additional insertion of cash (in a manner of display in the touch panel 46, sound from a speaker (not illustrated), or the like).

When the shopper 4 uses a payment card such as a credit card, a debit card, an electronic money card, and a prepaid card, the shopper 4 may designate payment in card to the payment machine 12, and then select a card to be used in the payment processing, and insert the selected card into the card reader and writer 50 in advance.

When the shopper 4 has a coupon which allows a discount for merchandise to be gotten, processing for the coupon may be performed. For example, when an input operation for getting the discount by the coupon is required, the shopper 4 may perform the input operation based on the information of the registered merchandise which is displayed on the touch panel 46.

In addition, in the payment machine 12, before the registration processing is completed in the register 10, payment preparation processing required for performing the payment processing may be performed in advance. The above-described details of the payment preparation processing are only an example and other processing may be performed.

If the CPU 40 receives the registration confirmation information from the store computer 14 (Act C5, Yes), the CPU 40 determines whether the entirety of the payment preparation processing to be performed before the payment processing is completed.

Here, when it is determined that the payment preparation processing is not completed (Act C15, No), the CPU 40 displays an operation screen for continuously performing the payment preparation processing (Act C16). The CPU 40 detects an input operation on the operation screen, which is performed by the shopper 4 (Act C17, Yes), and performs processing in accordance with the input operation (Act C19). As described above, when the CPU 40 detects that the detail button 83 provided on the operation screen is operated (Act C18, Yes), the CPU 40 displays the detail screen 73 (list) of registration information, instead of the operation screen (Act C20). Since the registration processing is completed, a list of pieces of registration information regarding all items of merchandise to be desired to be purchased by the shopper 4 is displayed on the detail screen 73 at this time. In addition, the total amount of money to be paid by the payment processing is displayed on the detail screen 73.

When it is not detected that the return button 97 on the detail screen 73 is operated (Act C21, No), the CPU 40 continues display of the above-described detail screen 73. When it is detected that the return button 97 on the detail screen 73 is operated (Act C21, Yes), the CPU 40 returns to the state where the operation screen is displayed, and which is a state before switching to display of the detail screen 73 is performed, and the CPU 40 performs payment preparation processing (Act C16).

In this manner, if the payment preparation processing is completed (Act C15, Yes), the CPU 40 performs payment processing (Act C22). That is, the CPU 40 performs the payment processing for the total amount of money to be paid, based on pieces of registration information regarding all items of merchandise which are registered as purchase targets.

For example, when the payment in cash is designated, the CPU 40 subtracts the total amount of money from the money which is previously inserted, and discharges the change from the change device 47. When payment with a payment card is designated, the CPU 40 performs the payment processing for the total amount of money in accordance with the used card. When the coupon processing is performed, the CPU 40 collects an amount of money obtained by applying a predetermined discount to merchandise which is a target of the discount.

If the payment processing is completed in this manner, the CPU 40 causes the printer 49 to print a receipt, and ends the payment processing for one transaction (one shopper 4).

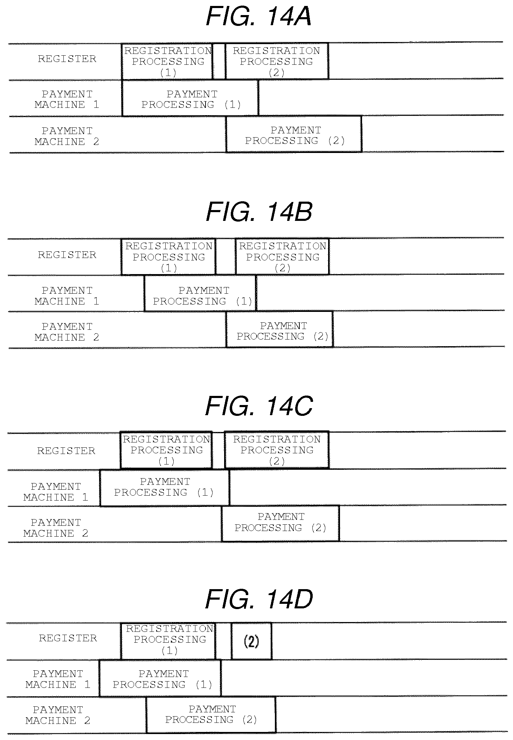

FIGS. 14A to 14D are diagrams illustrating a time required for performing the registration processing and the payment processing in the checkout system according to the embodiment.

FIG. 14A illustrates an example in which performing payment processing is set to be possible according to start of registration processing (scan operation) in the register 10. In this case, the registration processing (1) for the first shopper 4 may be performed in the register 10, and the payment processing (1) may be performed in the payment machine 1 in parallel with the registration processing (1). In the payment machine 1, the payment preparation processing may be performed during a period until the registration processing (1) is completed. Thus, if the registration processing (1) is completed, immediately, the payment processing is performed, and the payment processing (1) is ended.

After the registration processing (1) is completed in the register 10, registration processing (2) for the next shopper 4 is performed. Similarly, the payment processing (2) is performed in parallel with the registration processing (2), and the payment preparation processing may be performed during a period until the registration processing (1) is completed. Thus, if the registration processing (2) is completed, immediately, the payment processing is performed, and the payment processing (2) is ended.

FIG. 14B illustrates a case where the payment processing is started in the process of performing the registration processing in the register 10. In this case, the payment processing (1) is started in the payment machine 1 at a certain timing during a period when the registration processing (1) for the first shopper 4 is performed in the register 10. Then, the payment processing (1) may be performed in the payment machine 1 in parallel with the registration processing (1), during a period when the registration processing (1) is performed. In the payment machine 1, the payment preparation processing may be performed during a period until the registration processing (1) is completed. Thus, if the registration processing (1) is completed, immediately, the payment processing is performed, and the payment processing (1) is ended.

An example in which registration processing (2) for the next shopper 4 is started before the payment processing (1) is completed in the register 10 is illustrated. Similarly, payment processing (2) is performed in parallel with the registration processing (2), and payment preparation processing may be performed during a period until the registration processing (2) is completed. Thus, if the registration processing (2) is completed, immediately, the payment processing is performed, and the payment processing (2) is ended.

FIG. 14C illustrates a case where the payment processing is performed before the registration processing is started in the register 10. In this case, before the registration processing (1) for the first shopper 4 is started in the register 10, payment processing (1) is started in the payment machine 1. In the payment machine 1, payment preparation processing may be performed from a time before the registration processing (1) is started. Thus, if the registration processing (1) is completed, immediately, the payment processing is performed, and the payment processing (1) is ended. For the next shopper 4, for example, after the registration processing (1) is completed, starting payment processing in the payment machine 2 before the registration processing (2) is started is set to be possible. Thus, the payment preparation processing may be performed from a time before the registration processing (2) is started, and the payment preparation processing may be completed during a period when the registration processing (2) is performed. Thus, if the registration processing (2) is completed, immediately, the payment processing may be performed, and the payment processing (2) may be ended.

FIG. 14D illustrates, for example, a case where the registration processing (2) is ended for a short term (for example, a case where the number of items of purchased merchandise is small). Before the registration processing (1) for the first shopper 4 is started in the register 10, payment processing (1) is started in the payment machine 12. In the payment machine 1, payment preparation processing may be performed from a time before the registration processing (1) is started. Thus, if the registration processing (1) is completed, immediately, the payment processing is performed, and the payment processing (1) is ended. For the next shopper 4, for example, an operation of the shopper 4 causes payment processing in the payment machine 2 which is in the process of performing the registration processing (1) (before the registration processing (2) is started) to be started. Thus, the payment preparation processing as the payment processing (2) may be performed from a time before the registration processing (1) is ended (before the registration processing (2) is started). The payment processing has no relationship with the number of items of merchandise to be purchased, and the necessary operation is determined. Thus, a time required for completing the processing is also necessary to some degrees. As illustrated in FIG. 14D, when two payment machines are provided, even though the registration processing (1) is in the process of being performed in one payment machine, the payment preparation processing for the registration processing (2) may be started in another payment machine 2. If the payment preparation processing is completed until the registration processing (2) is completed, the payment processing may be performed and the payment processing (2) may be ended immediately when the registration processing (2) is completed. Thus, even when the registration processing (2) is completed for a short term, it is possible to significantly reduce a period until the payment processing (2) is completed.

In this manner, in the checkout system according to the embodiment, a transaction ID is issued before the registration processing is started in the register 10, and before the registration processing is completed in the register 10. Thus, the transaction ID may be input to the payment machine 12 in the standby state, so as to transition to a state where starting the payment processing (payment preparation processing) is possible, and the payment preparation processing may be performed in the payment machine 12 by the shopper 4, in parallel with the registration processing in the register 10. Accordingly, it is possible to reduce a period until the payment processing for one transaction is completed.

In the foregoing descriptions, it is supposed that, when a transaction ID for one shopper 4 (one transaction) is issued before the register 10 starts registration processing, an operation (reading operation of a membership card, button operation, and the like) of the checker 2 or the shopper 4 relating to the one transaction is performed. However, the transaction ID may be issued according to other conditions.

For example, when an instruction to end registration processing for one shopper 4 (one transaction) is performed (when the settlement key is operated), the register 10 issues a transaction ID for the next shopper 4 (next transaction). Thus, a shopper who waits for the next registration processing may move to the payment machine 12 before the registration processing is started in the register 10, and may start payment processing (payment preparation processing). For example, even when a situation where the checker 2 immediately starting the registration processing is not possible (for example, another customer correspondence, change of a checker 2, maintenance of the register 10, and the like) occurs, the transaction ID is issued at a time point when the registration processing for the previous shopper 4 is completed. Thus, payment preparation processing in the payment machine 12 can be started.

The register 10 may issue a transaction ID at a timing when a payment machine 12 in the empty state among the plurality of payment machines 12 is available. For example, the store computer 14 monitors operation statuses of the plurality of payment machines 12. If the store computer 14 detects that the payment machine 12 turns in the empty state (payment processing is completed), the store computer 14 notifies the register 10. The register 10 issues a transaction ID for the next shopper 4 at a timing when the notification is received from the store computer 14. At this time, the register 10 may display a message for notifying the shopper 4 of the payment machine 12 in the empty state, in a display for the shopper. The register 10 may perform printing on a receipt sheet in order to perform a notification of the payment machine 12 in the empty state along with the transaction ID. It is desirable that the shopper 4 may directly acquire the receipt sheet on which printing is performed by the register 10 without passing through the checker 2, so as not to suspend the scan operation of the checker 2. In this manner, the shopper 4 can move to the payment machine 12 which is operable and is in the empty state, and start payment preparation processing in a manner similar to the above descriptions, before registration processing in the register 10 is started.

In the foregoing descriptions, a transaction ID is issued in the register 10, the transaction ID is read in the payment machine 12 by an operation of the shopper 4, and thus payment processing in the payment machine 12 is started. However, an operation of causing the payment machine 12 to read the transaction ID, which is performed by the shopper 4 may be set to be unnecessary.

In this case, the register 10 outputs a request of performing the payment processing in the payment machine 12, according to an operation on a key (or button) provided on the keyboard 26 or the touch panel 27, which is performed by the checker 2. The store computer 14 notifies the payment machine 12 of the request of performing the payment processing, which is output from the register 10. A touch panel or a keyboard for receiving an operation of the shopper 4 in addition to the operation of the checker 2 may be provided. Thus, the request of performing the payment processing may be output to the payment machine 12 in a manner similar to the above descriptions, according to an operation of the shopper 4.

The register 10 also receives an operation from the checker 2 or the shopper 4 during a period when the registration processing is not performed (after the registration processing for the previous shopper is completed (settlement key is operated)), and a period when the registration processing is being performed. Thus, the register 10 can output the request of performing payment processing, at a certain timing. For example, the register 10 generally displays the payment-machine payment button B01 illustrated in FIG. 9, in a touch panel which is operable by the checker 2 and the shopper 4. The register 10 outputs the request of performing payment processing when an operation on the payment-machine payment button B01 is detected.

The plurality of payment machines 12 may determine one payment machine 12 which performs the payment processing by a method (first to third determination method) which is predetermined and will be described below. The determination is performed in response to the request of performing the payment processing, which is output from the register 10.

In a first determination method, it is determined whether a payment machine 12 is in a state (empty state) where performing payment processing is possible, in accordance with an order of priority which is set for the plurality of payment machines 12. The determination is performed in an order from a payment machine 12 having high priority. In this case, the store computer 14 notifies a payment machine 12 having the highest priority of the request of performing the payment processing. The payment machine 12 having the highest priority determines whether to be in the state where performing payment processing is possible, according to the notification from the store computer 14. As a result, when the payment machine 12 is not in the state where performing payment processing is possible, the store computer 14 notifies a payment machine 12 having the next highest priority, and causes the payment machine 12 to determine whether to be in the state where performing payment processing is possible, in the similar manner. Then, in the similar manner, the determination whether a payment machine 12 is in the state where performing payment processing is possible is performed in the payment machine 12 until a payment machine 12 determined to be in the state where performing payment processing is possible is provided. The determination is subsequently performed in accordance with the order of priority. The payment machine 12 determined to be in the state where performing payment processing is possible turns from the standby state to a state where starting payment processing is possible, for example, according to a predetermined operation by the shopper 4. In addition, the payment machine 12 transmits a payment machine number as a response, to the store computer 14. The store computer 14 notifies the register 10 which is a request source of performing payment processing, of the payment machine number of a payment machine 12 which performs the payment processing. The register 10, for example, displays the payment machine number according to the notification from the store computer 14. The register 10 notifies the checker 2 or the shopper 4 that starting payment processing in the payment machine 12 is possible.

In a second determination method, each of the plurality of payment machines 12 determines whether to be in the state where performing payment processing is possible, in response to the request of performing the payment processing. Each of the payment machines 12 notifies the store computer 14 of a result of the determination. The store computer 14 collects determination results (being capable or incapable of performing the payment processing) from the payment machines 12, and transmits the collection to the plurality of payment machines 12. Each of the payment machines 12 refers to the determination results received from the store computer 14, and determines that the payment machine 12 itself is to perform the payment processing when it is determined that the payment machine 12 itself has the highest priority which is preset for the plurality of payment machines 12, among the payment machines 12 which can perform the payment processing. The payment machine 12 determined to perform the payment processing responds to the store computer 14 in a manner similar to the above-described first determination method.

In a third determination method, collecting determination results of the plurality of payment machines 12 in the store computer 14, as in the second determination method is not performed. In the third determination method, the determination results are transmitted and received between the payment machines 12. Each of the payment machines 12 determines whether to perform the payment processing, based on the determination result and the priority of the payment machine 12, in a manner similar to the above descriptions. The payment machine 12 determined to perform the payment processing responds to the store computer 14 in a manner similar to the above-described first determination method.

In a case of any of the first to third determination methods, if a payment machine 12 which can perform payment processing is not provided at a time of the request of performing the payment processing, for example, the register 10 performs a notification that performing payment processing is not possible, in response to an operation of the checker 2 or the shopper 4. The notification is performed in a manner of display and the like. After a payment machine 12 which performs payment processing is determined, the store computer 14 transmits registration information output from the register 10, to the payment machine 12 to perform the payment processing, in a manner similar to that in above-described case where the payment machine 12 is caused to read a transaction ID.

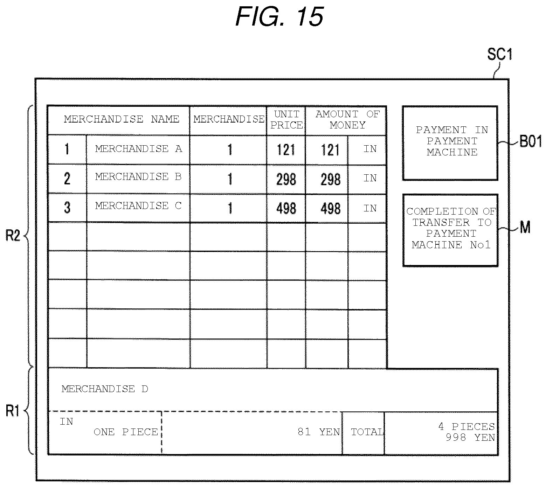

FIG. 15 is a diagram illustrating an example of a registration screen SC1 on which the payment machine number of a payment machine which performs the payment processing is displayed on the touch panel 27 of the register 10 in the embodiment. FIG. 15 illustrates an example of a case where the checker 2 operates the accounting-machine payment button B01 in the registration processing, and thus an instruction of a request of performing payment processing is performed.

The CPU 20 in the register 10 detects the operation on the payment-machine payment button B01, and outputs the request of performing payment processing. As a result of the output, if a notification of the payment machine number (for example, payment machine No1) of a payment machine 12 to perform payment processing is received from the store computer 14, a message M for a notification of the payment machine 12 (payment machine number) to perform payment processing is displayed on a registration screen SC1. The checker 2 may confirm the message M, and thus determine a payment machine 12 which is to perform the payment processing. The checker 2 may orally guide the payment machine 12 used in the payment processing, to the shopper 4. In the similar manner, the message M is displayed on the touch panel (or display) which allows the shopper 4 to confirm display contents. Thus, the shopper 4 may be directly notified of the payment machine 12 to perform the payment processing. The shopper 4 confirms the payment machine number. Thus, the shopper 4 may move to the payment machine 12 without waiting for completion of the registration processing, and start an operation for performing the payment processing (payment preparation processing).

When the shopper 4 performs a predetermined operation on, for example, the touch panel 46, the payment machine 12 in the state where starting payment processing is possible performs the payment processing (payment preparation processing) before registration processing is started in the register 10 or performs the payment processing in parallel with the registration processing in the register 10.

When the predetermined operation is performed on the touch panel 46, the payment machine 12 may perform the payment processing, and when a motion sensor and the like detects, for example, that a shopper 4 moves to be near the payment machine 12, the payment machine 12 may start the payment processing. When the shopper 4 approaches the payment machine 12, the payment machine 12, for example, displays a screen for indicating that the payment machine 12 is in a state where starting the payment processing is possible, in the touch panel 46 so as to notify the shopper 4. Thus, even when a plurality of payment machines 12 is in an empty state, only the payment machine 12 in a state where start is possible reacts when a shopper 4 is near the payment machines 12. Accordingly, the shopper 4 can easily recognize a payment machine 12 required to perform the payment processing.

In a manner similar to the above descriptions, the payment machine 12 may receive the registration information output from the register 10, through the store computer 14, and may perform the payment processing.

In this manner, only an operation for outputting a request of performing payment processing in the register 10 is performed, and thus a payment machine 12 to perform the payment processing may be determined without performing an operation of reading a transaction ID in the payment machine 12.

In the foregoing descriptions, information and the like is transmitted and received between the register 10 and the payment machine 12 through the store computer 14. However, the information and the like may be directly transmitted and received between the register 10 and the payment machine 12. In addition to determination of a payment machine 12 to perform payment processing in accordance with an operation of the checker 2 or the shopper 4 in the register 10, the payment machine 12 to perform payment processing may be determined according to other conditions. For example, a payment machine 12 to perform payment processing for the next transaction may be determined at a timing when an instruction to end registration processing for the previous shopper 4 (one transaction) is performed, or at a timing when the payment machine 12 turns in the empty state.

In the foregoing descriptions, a payment machine 12 to perform payment processing is determined from the plurality of payment machines 12, in accordance with a request of performing payment processing, which is output from the register 10. However, a payment machine 12 to perform the payment processing may be selected by an operation of the checker 2 or the shopper 4 in the register 10.

In this case, the store computer 14 monitors operation states of a plurality of payment machines 12, and recognizes a payment machine 12 (in the empty state) which is not in the process of the payment processing. The store computer 14 notifies the register 10 of a payment machine 12 which is not in the process of the payment processing. The register 10 displays an accounting-machine selection button in, for example, the touch panel which allows the checker 2 and the shopper 4 to perform confirmation, according to the notification from the store computer 14. The accounting-machine selection button is used for selecting a payment machine 12 which is not in the process of the payment processing. Basically, a button is displayed such that a payment machine 12 installed so as to be near to a place at which the register 10 is installed is preferentially selected. The register 10 continuously displays the accounting-machine selection button before registration processing is started, and during a period from when the registration processing is started, until the registration processing is completed. Accordingly, the checker 2 or the shopper 4 may select a payment machine 12 to perform payment processing, at a certain timing, and thus may start the payment processing.

If a certain payment machine 12 is selected by the operation of the checker 2 or the shopper 4, the register 10 notifies the store computer 14 of the selected payment machine 12. The store computer 14 causes the selected payment machine 12 to be in a state where starting payment processing is possible. The register 10 may generate a transaction ID and notify the store computer 14 of the generated transaction ID. Then, the register 10 may correlate registration information which is generated according to the scan operation, with the transaction ID, and output pieces of correlated information. Thus, the store computer 14 may store registration information output from the register 10. That is, for example, the store computer 14 may store the registration information in association with data (register number and the like) indicating the register 10 or with a transaction ID of which a notification is received from the register 10. Then, the store computer 14 may transmit the stored registration information to a payment machine 12 which is to perform payment processing.

In the foregoing descriptions, after a payment machine 12 to perform payment processing is determined, registration information regarding merchandise which is subjected to the scan operation in the register 10 may be transmitted to the payment machine 12 through the store computer 14 in real time, and the registration information is subsequently and additionally displayed. However, another method may be used.

For example, the register 10 records registration information of each item of merchandise, which is generated by the scan operation. The register 10 transmits a collection of pieces of recorded registration information to the store computer 14 when the registration processing is completed. The store computer 14 receives pieces of registration information regarding all items of merchandise, from the register 10, and then transmits a collection of the pieces of registration information of the all items of merchandise, to the payment machine 12. The payment machine 12 integrates pieces of information regarding all items of merchandise, based on the pieces of registration information received from the store computer 14, and displays the integrated pieces of information in a list.

In this manner, pieces of registration information regarding plural items of merchandise are collected and the collection is transmitted and received between the register 10, the store computer 14, and the payment machine 12. Thus, it is possible to reduce traffic (quantity of data of which communication is performed) of the network 16.

In the foregoing descriptions, the registration information created by the register 10 is set to be transmitted to the payment machine 12 through the store computer 14. However, the registration information correlated with a transaction ID may be transmitted to the payment machine 12 from the register 10 without passing through the store computer 14. In this case, the register 10 performs processing similar to the processing of the store computer 14, which is illustrated by the flowchart in Fig. 7. The register 10 controls recording of the generated registration information, and transmission of the registration information after a payment machine 12 functioning as a transmission destination is set. The registration confirmation information (notification of completion of registration processing) may be also directly transmitted to the payment machine 12 from the register 10.

In the foregoing descriptions, an example in which a salesperson operates the register 10 and a shopper 4 operates the payment machine 12 is described. However, an employee or a shopper 4 may operate any of the register 10 and the payment machine 12. In addition, a shopper 4 may operate the register 10, and a salesperson may operate the payment machine 12.

In the foregoing descriptions, the register 10 assumes, for example, a stationary type attached to the counter table 5 in a supermarket and the like. However, the register 10 may be a portable type which can be held and operated by a salesperson and the like. The portable register 10 may include, for example, a touch panel. The portable register 10 may perform registration of merchandise (an operation of inputting, selecting merchandise information, and the like) by a touch operation and the like of a salesperson. The register 10 may transmit and receive information to and from the main device (docking station) which has a function similar to that of the above-described payment machine 12, in wireless communication. In addition, if the register 10 is mounted in the main device, the register 10 may be connected to the main device through a network so as to transmit and receive information. In the checkout system having such a configuration, a request of performing payment processing according to an operation by a salesperson or a shopper 4 or to preset conditions may be output to the main device before all items of merchandise are completely registered in the register 10 (before a settlement operation is performed for one transaction). Accordingly, the state of the main device may be changed from the standby state to the state where performing payment processing is possible, and payment preparation processing may be started by a shopper 4.

In the configuration of the checkout system illustrated in FIG. 2, the plurality of registers 10 and the plurality of payment machines 12 are provided. However, a configuration configured with one register 10 and a plurality of payment machines 12, a configuration configured with a plurality of registers 10 and one payment machine 12, or a configuration configured with one register 10 and one payment machine 12 may be made. In the foregoing descriptions, the register 10 and the payment machine 12 are realized as independent devices. However, the register 10 and the payment machine 12 may be realized as one device which has functions of the above-described register 10 and payment machine 12.

In the foregoing descriptions, an operation for payment is assumed to be performed only in the payment machine 12 by a shopper 4. However, for example, the register 10 may include a change device, and thus cash may be inserted in the register 10 as payment preparation processing before registration processing for one transaction is completed (before registration processing, and in the process of registration processing). After payment processing in the payment machine 12 is ended, change may be received from the change device 47 of the payment machine 12. A portion of other processing included in the payment preparation processing, in addition to cash insertion, may be performed in the register 10, as described above.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A networked computer system comprising:
a register configured to generate registration information based on merchandise information, for each of a plurality of transactions, each of which is associated with a transaction ID;
a payment machine configured to perform payment processing separately for each group of registration information associated with one of the transaction IDs; and
a central computer networked with the register and the payment machine for communication therewith, the central computer storing the registration information transmitted from the register in association with the transaction ID for which the registration information was generated, and configured to transmit the registration information associated with a transaction ID to the payment machine when the payment machine confirms the transaction ID, wherein
the register is configured to issue a transaction ID for each separate transaction, and
the payment machine is configured to perform switching from a standby state to a payment processing state, upon confirming that the transaction ID corresponding to a particular transaction for which the register is currently generating registration information, has been properly input into the payment machine, so that payment processing for the registration information being generated by the register for the particular transaction is allowed to begin and a throughput of the networked computer system is increased.

2. The networked computer system according to claim 1, wherein the register and the payment machine are physically separate.

3. The networked computer system according to claim 1 or 2, wherein the payment machine is one of at least two payment machines, each of which is networked with the central computer and at any of which payment processing for a particular transaction can be started, upon confirming that the transaction ID corresponding to the particular transaction for which the register is currently generating registration information, has been properly input.

4. The networked computer system according to claim 3, wherein another one of the payment machines is carrying out payment processing for another transaction for which the register previously generated registration information.

5. The networked computer system according to any one of claims 1 to 4, wherein the register is configured to issue the transaction ID for a transaction prior to receiving an input through the register that the transaction has completed.

6. The networked computer system according to any one of claims 1 to 5, wherein
the register incudes a touch screen that displays a button for receiving an instruction to start the payment processing for the transaction for which the register is currently generating registration information, and detects the instruction indicating the start of the payment processing in accordance with an operation on the button.

7. The networked computer system according to any one of claims 1 to 5, wherein the register is configured to issue the transaction ID for a transaction prior to generating registration information based on the merchandise information.

8. The networked computer system according to any one of claims 1 to 7, wherein
the register issues the transaction ID based on data read from a recording medium, and
the payment machine is configured to read data from recording medium when confirming that the transaction ID has been properly input into the payment machine.

9. A networked computer system, comprising:
a register configured to generate registration information based on merchandise information, for each of a plurality of transactions, each of which is associated with a transaction ID;
a payment machine configured to perform payment processing separately for each group of registration information associated with one of the transaction IDs; and
a central computer networked with the register and the payment machine for communication therewith, the central computer storing the registration information transmitted from the register in association with the transaction ID for which the registration information was generated, and configured to transmit the registration information associated with a transaction ID to the payment machine when the payment machine confirms the transaction ID, wherein
the register is configured to transmit a start instruction of the payment processing for a particular transaction for which the register is currently generating registration information, in accordance with detection of an instruction indicating that the payment processing is to be started, and
the payment machine is configured to perform switching from a standby state to a payment processing state upon confirming that the transaction ID corresponding to a particular transaction for which the register is currently generating registration information, has been properly input into the payment machine, so that payment processing for the registration information being generated by the register for the particular transaction is allowed to begin and a throughput of the networked computer system is increased.

10. The networked computer system according to claim 9, wherein the register and the payment machine are physically separate.

11. The networked computer system according to claim 9 or 10, wherein the payment machine is one of at least two payment machines, each of which is networked with the central computer and at any of which payment processing for a particular transaction can be started, upon confirming that the transaction ID corresponding to the particular transaction for which the register is currently generating registration information, has been properly input.

12. The networked computer system according to claim 11, wherein another one of the payment machines is carrying out payment processing for another transaction for which the register previously generated registration information.

13. The networked computer system according to any one of claims 9 to 12, wherein the register incudes a touch screen that displays a button for receiving the start instruction, and detects the instruction indicating the start of the payment processing in accordance with an operation on the button.

14. The networked computer system according to claim 13, wherein the button is displayed on the touch screen prior to displaying a key for indicating completion of the transaction.

15. A method of enhancing processing throughput of a networked computer system having a register configured to generate registration information based on merchandise information, for each of a plurality of transactions, each of which is associated with a transaction ID, a payment machine configured to perform payment processing separately for each group of registration information associated with one of the transaction IDs, and a central computer networked with the register and the payment machine for communication therewith, said method comprising:
at the register, issuing a transaction ID for a transaction for which the register is currently generating registration information, and transmitting the registration information to the central computer;
at the central computer, storing the registration information transmitted from the register in association with the transaction ID for which the registration information was generated;
at the payment machine, switching from a standby state to a payment processing state, upon confirming that the transaction ID corresponding to a particular transaction for which the register is currently generating registration information, has been properly input into the payment machine; and
at the central computer, transmitting the registration information associated with the confirmed transaction ID to the payment machine.
